# EUROPEAN PATENT SPECIFICATION

(11) **EP 3 947 310 B1**
(45) Date of publication and mention of the grant of the patent: **22.03.2023**
(21) Application number: 20718711.3
(22) Date of filing: 27.03.2020
(51) Int. Cl.: C03C 17/00, C03C 17/25, B65D 23/08

(54) **COATED SUBSTRATE AND PROCESS OF PREPARATION**
BESCHICHTETES SUBSTRAT UND VERFAHREN ZU SEINER HERSTELLUNG
SUBSTRAT REVÊTU ET PROCÉDÉ DE PRÉPARATION

(30) Priority: 29.03.2019 GB 201904453
(43) Date of publication of application: 09.02.2022
(73) Proprietor: Pilkington Group Limited, Lathom Nr. Ormskirk Lancashire L40 5UF (GB)
(72) Inventor: BROWN, Jack, Liverpool Merseyside L17 8UJ (GB); MADIN, Claire, Manchester Lancashire WN4 0SD (GB); RAISBECK, Deborah, Burscough Lancashire L40 5SF (GB); VARMA, Karikath Sukumar, Birkdale Southport Merseyside PR8 2BE (GB)
(74) Representative: Marsh, Andrew James
(86) International application number: PCT/GB2020/050828
(87) International publication number: WO 2020/201729

(56) References cited:
- US-A1- 2004 265 253
- US-A1- 2013 299 378
- US-A1- 2014 254 037

## Description

This invention relates to a coated glass substrate and a process for preparing a coated glass substrate.

The detrimental effects of UV radiation are a problem in, for example, the brewing industry where beer becomes 'light-struck' upon exposure of a substantially transparent or transparent bottle to sunlight or fluorescent lighting. The radiation can degrade isohumulones - organic molecules present in the beer which are derived from hops - and the photo degradation products combine with sulphur to yield obnoxious compounds, particularly 3-methyl-2-butene-1-thiol (3MBT). Even in very small quantities (parts per trillion), these sulphur containing compounds can spoil the taste or smell of the beer. This effect is also known as skunking.

This problem has been partially addressed by use of dark coloured bottles, typically green or brown, with varying degrees of success. Brown bottles in particular offer significant blocking of UV radiation but their use brings about other problems, particularly in continuous production processes where, for example, transitions between different glass compositions give rise to lost production, energy and materials.

The manufacture of glass bottles or jars by modern methods is well known (see for example "Glass Making Today"; edited by P. J. Doyle; Portcullis Press, ISBN 0 86108 047 5). Typically, a blank shape is first formed by blowing or pressing a slug or 'gob' of molten glass against the walls of a blank mould. The 'blank' so formed is transferred to a 'blow' mould where the final shape of the article is imparted by blowing against the interior of the latter. Variations on this process may occur but modern production methods typically give rise to a shaped glass container emerging from a mould, the container still bearing significant residual heat from the shaping process.

US 2013/0299378 A1 describes a process whereby a solution having a composition including a silane, a solvent, a catalyst and water is applied to an exterior surface of a glass container, at a temperature between 40 and 60 °C. The glass container is then heated at a temperature greater than 500 °C to produce Si-O-Si bonds with the exterior surface of the container. The solution may be doped with a UV blocking material. US-2014254037 shows a colored mirror includes a transparent substrate and a reflective layer, including a coloring layer between the substrate and the reflective layer, the coloring layer including a matrix and a colorant.

However it would be desirable to provide a coated glass substrate that both counteracts the negative effects of electromagnetic radiation and has improved durability to humidity. Additionally, at present it is not easy to determine where a UV blocking coating has been deposited so it would be advantageous to provide a more visually conspicuous coating. It would also be desirable to provide a coated glass substrate that has an attractive aesthetic appearance.

According to a first aspect of the present invention there is provided a coated glass substrate as set out in claim 1.

The inventors have surprisingly found that the composition of the blocking layer affords the coated glass substrate with improved durability to humidity, exemplified by a reduced tendency for the blocking layer to delaminate. Furthermore, the coated glass substrate exhibits an aesthetically pleasing colouration which is instantly recognisable to the naked eye.

In the context of the present invention, where a layer is said to be "based on" a particular material or materials, this means that the layer predominantly consists of the corresponding said material or materials, which means typically that it comprises at least about 50 at.% of said material or materials.

In the following discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention. Typically, when referring to compositions, a composition consisting essentially of a set of components will comprise less than 5% by weight, typically less than 3% by weight, more typically less than 1% by weight of non-specified components.

The term "consisting of" or "consists of" means including the components specified but excluding other components.

Whenever appropriate, depending upon the context, the use of the term "comprises" or "comprising" may also be taken to include the meaning "consists essentially of" or "consisting essentially of", and also may also be taken to include the meaning "consists of" or "consisting of".

References herein such as "in the range x to y" are meant to include the interpretation "from x to y" and so include the values x and y.

In the context of the present invention a transparent material or a transparent substrate is a material or a substrate that is capable of transmitting visible light so that objects or images situated beyond or behind said material can be distinctly seen through said material or substrate.

In the context of the present invention the "thickness" of a layer is, for any given location at a surface of the layer, represented by the distance through the layer, in the direction of the smallest dimension of the layer, from said location at a surface of the layer to a location at an opposing surface of said layer.

In the context of the present invention a "derivative" is a chemical substance related structurally to another chemical substance and theoretically derivable from it.

In the context of the present invention a "container" is a device suitable for containing, amongst other things, liquids, powders and gels.

When a container is completely filled with e.g. a liquid, only part of its surface is in contact with said liquid. In the context of the present invention, the "inner surface" of the container denotes the part of the surface of the container that is in contact with the liquid when the container is completely filled. By contrast, the remainder of the surface of the container, which is not in contact with the liquid when the container is filled completely, is referred to as the "external surface".

Preferably the transparent glass substrate is a glass container. Preferably the glass container is a bottle, vial, tube, canister or jar.

Preferably the blocking layer is located on the external surface of the container. In some embodiments the blocking layer may coat the entire external surface of the container. In alternative embodiments the blocking layer may coat part of the external surface of the container. Preferably the blocking layer coats at least 70%, more preferably at least 80%, even more preferably at least 90%, most preferably at least 95% of the external surface of the container.

The glass container preferably comprises a closed base located at a first end of the glass container. Preferably the glass container further comprises a body extending from the closed base and being circumferentially closed. Preferably the glass container further comprises an open mouth (commonly called "the finish"). Preferably the open mouth is located at a second end of the glass container. Said second end of the glass container is preferably an end that is opposite (i.e. farthest from) said first end of the glass container. Preferably the body extends axially from the base.

Preferably the glass container further comprises a neck that extends from the body and terminates at the open mouth. Preferably the neck extends axially from the body. Preferably the neck is generally conical in shape.

Preferably the blocking layer does not coat the open mouth. This arrangement reduces the likelihood of issues arising from filling the glass container with a substance which then contacts the blocking layer. Preferably the blocking layer coats the entire external surface of the container apart from a region at least 0.5 cm from the open mouth, more preferably at least 1 cm from the open mouth, even more preferably at least 1.5 cm from the open mouth, most preferably at least 2 cm from the open mouth, but preferably at most 4 cm from the open mouth, more preferably at most 3.5 cm from the open mouth, even more preferably at most 3 cm from the open mouth.

Preferably the blocking layer is obtained by a sol-gel process. In the context of the present invention the term "sol-gel process" denotes a process wherein a medium comprising at least one silicon coupling agent (e.g. an alkoxide of formula Si(OR)₄ wherein each R group is an organic group that may be identical or different from one or more of the other R groups) is hydrolysed. As it hydrolyses, the silicon coupling agent is converted into hydroxylated species (e.g. of formula Si(OH)₄) which condense together to form mineral oxide particles by a process which is comparable to a polymerisation of the silicon coupling agent. Typically, those hydrolysis and condensation reactions first yield a sol (a suspension of oxide particles) which gradually becomes concentrated, the particles that are forming occupying an ever larger volume fraction, whereby a gel is obtained; hence the generic expression "sol-gel" given to processes of this type.

Preferably the material having Si-O-Si bonds comprises a material having a crosslinked network of Si-O-Si bonds. Preferably the material having Si-O-Si bonds comprises a material bonded to the transparent glass substrate via Si-O-Si bonds. The Si-O-Si bonds of the material of the blocking layer may be ionic or covalent.

Preferably the material having Si-O-Si bonds further comprises one or more organic functional groups. Preferably said one or more organic functional group each comprises between 1 and 10 carbon atoms, more preferably between 2 and 8 carbon atoms, even more preferably between 3 and 7 carbon atoms. Preferably said one or more organic functional group further comprises at least one alkyl moiety. Preferably said one or more organic functional group further comprises at least one ether moiety. Preferably said one or more organic functional group comprises at least one glycidoxyalkyl group and/or derivatives, more preferably at least one glycidoxypropyl group and/or derivatives.

The blocking layer may comprise a material having one or more silicate ester functional group. Said silicate ester functional group may be obtained via a reaction between i) a polyol and/or diol and ii) a silanol. Said silanol may be derived from a silane or silane coupling agent as defined below.

Preferably the blocking layer further comprises a polyol and/or diol.

Said polyol may comprise one or more of polyether polyols such as polyoxyalkylene triols e.g. polyoxypropylene triol; glycerol, sorbitol, mannitol, maltitol, lactitol, xylitol, isomalt, erythritol, polyvinyl alcohol; and cyclitols such as bornesitol, conduritol, inositol, ononitol, pinitol, pinpollitol, quebrachitol, quinic acid, shikimic acid, valienol, viscumitol and ciceritol. Preferably said polyol comprises glycerol.

Said diol may comprise one or more of ethylene glycol, diethylene glycol, 1,2-ethanediol, propane-1,2-diol, propane-1,3-diol, 2-methyl-2-propyl-1,3-propanediol, neopentyl glycol, 1,4-butanediol, bisphenol A, propylene-1,3-diol, beta propylene glycol, resorcinol, methanediol, cyclohexanediol and 1,5-pentanediol.

Preferably the blocking component is a material that is capable of blocking, preferably absorbing, electromagnetic radiation in the wavelength range 10-500 nm, more preferably 200-500 nm, even more preferably 250-500 nm, even more preferably 300-500nm, even more preferably 350-500 nm, most preferably 380-500nm. These preferred wavelength ranges are of interest since they are ranges at which the skunking of beer may occur.

The fluorone derivative comprises one or more of calcein, carboxyfluorescein diacetate succinimidyl ester, carboxyfluorescein succinimidyl ester, 6-carboxyfluorescein, dichlorofluorescein, eosin, eosin B, eosin Y, erythrosine, fluo-3, fluo-4, fluorescein, fluorescein amidite, fluorescein isothiocyanate, Indian yellow, merbromin, 3-carboxy-6,8-difluoro-7-hydroxycoumarin (Pacific blue), phloxine, rhodamine, rhodamine B, rhodamine 6G, rhodamine 123, carboxytetramethylrhodamine (TAMRA), tetramethylrhodamine (TMR) and its isothiocyanate derivative (TRITC), sulforhodamine 101 (and its sulfonyl chloride form Texas red), rhodamine red, NHS-rhodamine and seminaphtharhodafluor.

Preferably the fluorone and/or a fluorone derivative comprises rhodamine and/or a rhodamine derivative.

Preferably the blocking layer comprises at least 2%wt of the blocking component, more preferably at least 4%wt, even more preferably at least 5%wt, most preferably at least 5.5%wt, but preferably at most 6%wt, more preferably at most 15%wt, even more preferably at most 10%wt, most preferably at most 8%wt. These preferred ranges provide advantages in terms of improved blocking of electromagnetic radiation whilst avoiding the leaching out of excess blocking component. Preferably the blocking component is dispersed and/or trapped within the blocking layer.

The blocking layer may preferably have a physical thickness of at least 1 micrometre, more preferably at least 10 micrometres, even more preferably at least 100 micrometres, most preferably at least 400 micrometres, but preferably at most 1000 micrometres, more preferably at most 700 micrometres, even more preferably at most 600 micrometres, most preferably at most 500 micrometres.

Preferably the coated glass substrate comprises:
a transparent glass substrate coated with
a blocking layer comprising a material having Si-O-Si bonds and a blocking component,
wherein the blocking component comprises fluorone and/or a fluorone derivative,
wherein the transparent glass substrate is a glass container,
wherein the blocking layer coats at least 80% of the external surface of the container,
wherein the material having Si-O-Si bonds comprises a material having a crosslinked network of Si-O-Si bonds,
wherein the blocking component is a material that is capable of blocking electromagnetic radiation in the wavelength range 350-500 nm, and
wherein the fluorone and/or a fluorone derivative comprises rhodamine and/or a rhodamine derivative.

According to a second aspect of the present invention there is provided a process for preparing a coated glass substrate in accordance with the first aspect of the present invention,
said process comprising the following steps:
a) preparing a solution or mixture by mixing at least the following components: a silane, a blocking component, water and an acid, wherein the blocking component comprises fluorone and/or a fluorone derivative;
b) applying said solution or mixture to a surface of a transparent glass substrate; and
c) curing the applied solution or mixture.

It has surprisingly been found that this process can be used to apply a coating that can block electromagnetic radiation to a glass substrate that is at a higher temperature than has previously been possible. This enables coating of a glass substrate, e.g. a glass container, shortly after manufacture, without the necessity to cool the glass substrate in order to allow coating. The incumbent processes require the glass substrate to be cooled before coating otherwise the blocking layer is hazy and does not adhere sufficiently to the substrate.

Preferably steps a), b) and c) are carried out in sequence.

Preferably, in step a) the mixing occurs by stirring. Preferably the stirring is carried out for at least 10 min, more preferably at least 20 min, even more preferably at least 30 min, most preferably at least 40 min. Preferably, in step a) following the mixing the solution or mixture is aged (i.e. the solution is allowed to stand). Preferably, in step a) following the mixing the solution or mixture is aged for at least 2 hr, more preferably at least 7 hr, even more preferably at least 10 hr, most preferably at least 12 hr. Aging the solution or mixture is advantageous since it facilitates the formation of Si-O-Si bonds. Preferably the mixing and/or aging is carried out at a temperature of between 1 °C and 30 °C, more preferably between 3 °C and 20 °C, even more preferably between 4 °C and 10 °C.

Preferably, in step b), when the solution or mixture is applied to the surface of the transparent glass substrate, said transparent glass substrate is at a temperature of less than 150°C, more preferably less than 100°C, even more preferably less than 70°C, most preferably less than 50°C.

Preferably, in step c), the applied solution or mixture is cured for at least 20 min, more preferably at least 40 min, even more preferably at least 50 min, most preferably at least 55 min, but preferably at most 24 hr, more preferably at most 10 hr, even more preferably at most 3 hr, most preferably at most 1.5 hr. These preferred durations enable better formation of the required Si-O-Si bonds, improving durability.

Preferably, in step c), the applied solution or mixture is cured at a temperature of greater than 20°C, more preferably greater than 100°C, even more preferably greater than 160°C, most preferably greater than 190°C, but preferably less than 400°C, more preferably less than 300°C, even more preferably less than 240°C, most preferably less than 210°C. These preferred curing temperatures enable better formation of the required Si-O-Si bonds, improving durability.

It is preferred that the silane is represented by the formula (1):

SiX₄ (1)

wherein X is a hydrolysable functional group or a halogen atom.

The hydrolyzable functional group is, for example, at least one selected from an alkoxy group, an acetoxy group, and an alkenyloxy group. Examples of the alkoxy group include an alkoxy group having 1 to 6, preferably 1 to 4 carbon atoms (such as a methoxy group, an ethoxy group, a propoxy group, and a butoxy group). A preferred hydrolyzable functional group is an alkoxy group. The halogen atom is, for example, chlorine or bromine, and is preferably chlorine. Preferably the silane is a tetraalkoxysilane such as tetraethoxysilane (TEOS). The alkoxy group is preferably an alkoxy group having 1 to 4 carbon atoms.

Preferably the solution or mixture prepared in step a) has a molar percentage (mol%) of the silane of at least 1 mol%, more preferably at least 2 mol%, even more preferably at least 3 mol%, most preferably at least 4 mol%, but preferably at most 15 mol%, more preferably at most 10 mol%, even more preferably at most 8 mol%, most preferably at most 6.5 mol%. The mol% of the silane in the solution or mixture prepared in step a) is defined as: (the number of moles of the silane in the solution or mixture prepared in step a) / the total number of moles in the solution or mixture prepared in step a)) x 100%.

Preferably the solution or mixture prepared in step a) has a weight percentage (wt%) of the silane of at least 5 wt%, more preferably at least 10 wt%, even more preferably at least 15 wt%, most preferably at least 20 wt%, but preferably at most 45 wt%, more preferably at most 40 wt%, even more preferably at most 35 wt%, most preferably at most 30 wt%. The wt% of the silane in the solution or mixture prepared in step a) is defined as: (the mass of the silane in the solution or mixture prepared in step a) / the total mass of the solution or mixture prepared in step a)) x 100%.

Preferably the components mixed in step a) further comprise a silane coupling agent represented by the formula (2):

R¹ₘR²ₙSiX₄₋ₘ₋ₙ (2)

wherein R¹ is an organic group having a reactive functional group, R² is an organic group having no reactive functional group, X is a hydrolysable functional group or a halogen atom, m is an integer of 1 to 3, n is an integer of 0 to 2, and m+n is an integer of 1 to 3.

The reactive functional group is, for example, at least one selected from a vinyl group, an acryloyl group, a methacryloyl group, an isocyanurate group, a ureido group, a mercapto group, a sulfide group, an isocyanate group, an epoxy group, and an amino group. The epoxy group may be a part of a glycidyl group, particularly an oxyglycidyl group. The amino group may be any of a primary amino group, a secondary amino group, and a tertiary amino group. Preferred reactive functional groups are an epoxy group and an amino group, and an epoxy group is particularly preferable. The organic group having a reactive functional group may be, for example, an organic group that acts as a reactive functional group by itself (e.g., a vinyl group) or may be, for example, an aliphatic or aromatic hydrocarbon group in which at least one hydrogen atom is substituted by a reactive functional group. Examples of the aliphatic hydrocarbon group include a linear alkyl group having 1 to 10 carbon atoms and a branched alkyl group having 3 to 10 carbon atoms. Examples of the aromatic hydrocarbon group include a phenyl group.

The organic group having no reactive functional group is, for example, an aliphatic or aromatic hydrocarbon group. Examples of the aliphatic hydrocarbon group include a linear alkyl group having 1 to 10 carbon atoms and a branched alkyl group having 3 to 10 carbon atoms. Examples of the aromatic hydrocarbon include a phenyl group.

Examples of X, the hydrolysable functional group or halogen atom, for formula (2) are the same as the examples set out above in relation to formula (1).

The integer m is preferably 1 or 2, the integer n is preferably 0 or 1, and the integer m+n is preferably 1 or 2.

Examples of the silane coupling agent include vinyltriethoxysilane, p-styryltrimethoxysilane, 3-glycidoxypropyltrimethoxysilane (GPTMS), 3-glycidoxypropylmethyldiethoxysilane, 3-methacryloxypropyltrimethoxysilane, 3-aminopropyltrimethoxysilane, 3-aminopropyltriethoxysilane, N-phenyl-3-aminopropyltrimethoxysilane, tris-(trimethoxysilylpropyl)isocyanurate, 3-ureidopropyltrimethoxysilane, 3-mercaptopropyltrimethoxysilane and derivatives.

Preferably the solution or mixture prepared in step a) has a molar percentage (mol%) of the silane coupling agent of at least 0.5 mol%, more preferably at least 1 mol%, even more preferably at least 1.5 mol%, most preferably at least 1.8 mol%, but preferably at most 10 mol%, more preferably at most 5 mol%, even more preferably at most 3 mol%, most preferably at most 2 mol%. The mol% of the silane coupling agent in the solution or mixture prepared in step a) is defined as: (the number of moles of the silane coupling agent in the solution or mixture prepared in step a) / the total number of moles in the solution or mixture prepared in step a)) x 100%.

Preferably the solution or mixture prepared in step a) has a weight percentage (wt%) of the silane coupling agent of at least 2 wt%, more preferably at least 5 wt%, even more preferably at least 8 wt%, most preferably at least 10 wt%, but preferably at most 25 wt%, more preferably at most 20 wt%, even more preferably at most 15 wt%, most preferably at most 12 wt%. The wt% of the silane coupling agent in the solution or mixture prepared in step a) is defined as: (the mass of the silane coupling agent in the solution or mixture prepared in step a) / the total mass of the solution or mixture prepared in step a)) x 100%.

Preferably the solution or mixture prepared in step a) further comprises a polyol and/or diol.

Examples of the polyol and/or diol and the blocking component are the same as the examples set out above in relation to the first aspect of the present invention.

Preferably the solution or mixture prepared in step a) has a molar percentage (mol%) of the polyol and/or diol of at least 2 mol%, more preferably at least 4 mol%, even more preferably at least 5 mol%, most preferably at least 6 mol%, but preferably at most 20 mol%, more preferably at most 15 mol%, even more preferably at most 10 mol%, most preferably at most 7 mol%. The mol% of the polyol and/or diol in the solution or mixture prepared in step a) is defined as: (the number of moles of the polyol and/or diol in the solution or mixture prepared in step a) / the total number of moles in the solution or mixture prepared in step a)) x 100%.

Preferably the solution or mixture prepared in step a) has a weight percentage (wt%) of the polyol and/or diol of at least 5 wt%, more preferably at least 10 wt%, even more preferably at least 13 wt%, most preferably at least 14 wt%, but preferably at most 30 wt%, more preferably at most 25 wt%, even more preferably at most 20 wt%, most preferably at most 16 wt%. The wt% of the polyol and/or diol in the solution or mixture prepared in step a) is defined as: (the mass of the polyol and/or diol in the solution or mixture prepared in step a) / the total mass of the solution or mixture prepared in step a)) x 100%.

Preferably the solution or mixture prepared in step a) has a molar percentage (mol%) of the blocking component of at least 0.1 mol%, more preferably at least 0.2 mol%, even more preferably at least 0.3 mol%, most preferably at least 0.4 mol%, but preferably at most 2 mol%, more preferably at most 1 mol%, even more preferably at most 0.7 mol%, most preferably at most 0.5 mol%. The mol% of the blocking component in the solution or mixture prepared in step a) is defined as: (the number of moles of the blocking component in the solution or mixture prepared in step a) / the total number of moles in the solution or mixture prepared in step a)) x 100%.

Preferably the solution or mixture prepared in step a) has a weight percentage (wt%) of the blocking component of at least 1 wt%, more preferably at least 1.5 wt%, even more preferably at least 2 wt%, most preferably at least 2.5 wt%, but preferably at most 10 wt%, more preferably at most 5 wt%, even more preferably at most 4 wt%, most preferably at most 3 wt%. The wt% of the blocking component in the solution or mixture prepared in step a) is defined as: (the mass of the blocking component in the solution or mixture prepared in step a) / the total mass of the solution or mixture prepared in step a)) x 100%.

Preferably the solution or mixture prepared in step a) has a molar percentage (mol%) of water of at least 50 mol%, more preferably at least 60 mol%, even more preferably at least 70 mol%, most preferably at least 73 mol%, but preferably at most 90 mol%, more preferably at most 80 mol%, even more preferably at most 77 mol%, most preferably at most 75 mol%. The mol% of water in the solution or mixture prepared in step a) is defined as: (the number of moles of water in the solution or mixture prepared in step a) / the total number of moles in the solution or mixture prepared in step a)) x 100%.

Preferably the solution or mixture prepared in step a) has a weight percentage (wt%) of water of at least 15 wt%, more preferably at least 20 wt%, even more preferably at least 25 wt%, most preferably at least 30 wt%, but preferably at most 50 wt%, more preferably at most 45 wt%, even more preferably at most 40 wt%, most preferably at most 35 wt%. The wt% of water in the solution or mixture prepared in step a) is defined as: (the mass of water in the solution or mixture prepared in step a) / the total mass of the solution or mixture prepared in step a)) x 100%.

Preferably the acid comprises one or more of nitric acid, acetic acid, hydrochloric acid and sulphuric acid. Preferably the acid comprises nitric acid.

Preferably the solution or mixture prepared in step a) has a molar percentage (mol%) of acid of at least 0.1 mol%, more preferably at least 0.2 mol%, even more preferably at least 0.25 mol%, most preferably at least 0.3 mol%, but preferably at most 2 mol%, more preferably at most 1 mol%, even more preferably at most 0.6 mol%, most preferably at most 0.4 mol%. The mol% of acid in the solution or mixture prepared in step a) is defined as: (the number of moles of acid in the solution or mixture prepared in step a) / the total number of moles in the solution or mixture prepared in step a)) x 100%.

Preferably the solution or mixture prepared in step a) has a weight percentage (wt%) of acid of at least 0.1 wt%, more preferably at least 0.3 wt%, even more preferably at least 0.4 wt%, most preferably at least 0.45 wt%, but preferably at most 5 wt%, more preferably at most 1 wt%, even more preferably at most 0.6 wt%, most preferably at most 0.55 wt%. The wt% of acid in the solution or mixture prepared in step a) is defined as: (the mass of acid in the solution or mixture prepared in step a) / the total mass of the solution or mixture prepared in step a)) x 100%.

Preferably the components mixed in step a) further comprise an additional solvent such as one or more of methanol, ethanol, n-propanol, i-propanol, butanol, diethylene glycol, acetone, methylethylketones, triethylene glycols, vinylpyrrolidones, toluene, phenol, benzyl alcohol, dioxane and derivatives. Preferably the additional solvent is an alcohol, more preferably ethanol.

Preferably the solution or mixture prepared in step a) has a molar percentage (mol%) of the additional solvent of at least 5 mol%, more preferably at least 8 mol%, even more preferably at least 10 mol%, most preferably at least 12 mol%, but preferably at most 25 mol%, more preferably at most 20 mol%, even more preferably at most 15 mol%, most preferably at most 13 mol%. The mol% of the additional solvent in the solution or mixture prepared in step a) is defined as: (the number of moles of the additional solvent in the solution or mixture prepared in step a) / the total number of moles in the solution or mixture prepared in step a)) x 100%.

Preferably the solution or mixture prepared in step a) has a weight percentage (wt%) of the additional solvent of at least 5 wt%, more preferably at least 9 wt%, even more preferably at least 12 wt%, most preferably at least 13 wt%, but preferably at most 30 wt%, more preferably at most 22 wt%, even more preferably at most 17 wt%, most preferably at most 15 wt%. The wt% of the additional solvent in the solution or mixture prepared in step a) is defined as: (the mass of the additional solvent in the solution or mixture prepared in step a) / the total mass of the solution or mixture prepared in step a)) x 100%.

Preferably the components mixed in step a) further comprise a surfactant such as a polysiloxane. Preferably the polysiloxane comprises an organically modified polysiloxane, more preferably one or more of a polyether modified polysiloxane and a polymethylalkylsiloxane.

Preferably the solution or mixture prepared in step a) has a weight percentage (wt%) of the surfactant of at least 0.1 wt%, more preferably at least 0.5 wt%, even more preferably at least 0.6 wt%, most preferably at least 0.7 wt%, but preferably at most 5 wt%, more preferably at most 3 wt%, even more preferably at most 2 wt%, most preferably at most 1 wt%. The wt% of the surfactant in the solution or mixture prepared in step a) is defined as: (the mass of the surfactant in the solution or mixture prepared in step a) / the total mass of the solution or mixture prepared in step a)) x 100%.

In step b) the solution or mixture is preferably applied to the surface of the transparent glass substrate by spraying, flow coating, roller coating or a slot die, most preferably by spraying. Preferably the spraying is carried out using at least two nozzles. Preferably said nozzles are directed towards opposing sides of the transparent glass substrate.

Preferably, wherein in step a) following the mixing the solution or mixture is aged (i.e. the solution or mixture is allowed to stand) for at least 2 hr;
wherein in step b), when the solution or mixture is applied to the surface of the transparent glass substrate, said transparent glass substrate is at a temperature of greater than 60°C;
wherein the silane is a tetraalkoxysilane;
wherein the components mixed in step a) further comprise a silane coupling agent represented by the formula (2):

   R¹ₘR²ₙSiX₄₋ₘ₋ₙ (2)
wherein R¹ is an organic group having a reactive functional group, R² is an organic group having no reactive functional group, X is a hydrolysable functional group or a halogen atom, m is an integer of 1 to 3, n is an integer of 0 to 2, and m+n is an integer of 1 to 3; and
wherein the fluorone and/or a fluorone derivative comprises rhodamine and/or a rhodamine derivative.

More preferably for the embodiment of the previous paragraph the solution or mixture prepared in step a) has a molar percentage (mol%) of a polyol and/or diol, preferably glycerol, of at least 4 mol%, preferably at least 6 mol%.

Preferably, for the embodiments of the preceding two paragraphs, the components mixed in step a) further comprise an additional solvent, more preferably an alcohol.

According to a third aspect of the present invention there is provided the use of fluorone and/or a fluorone derivative as a UV blocking component of a blocking layer coating a transparent glass substrate wherein the blocking layer further comprises a material having Si-O-Si bonds.

According to a fourth aspect of the present invention there is provided the use of fluorone and/or a fluorone derivative to improve the durability to humidity of a blocking layer coating a transparent glass substrate wherein the blocking layer further comprises a material having Si-O-Si bonds.

Any feature set out above in relation to the first and second aspects of the present invention may also be utilised in relation to any other aspect of the present invention. Any invention described herein may be combined with any feature of any other invention described herein *mutatis mutandis.* It will be appreciated that optional features applicable to one aspect of the invention can be used in any combination, and in any number. Moreover, they can also be used with any of the other aspects of the invention in any combination and in any number. This includes, but is not limited to, the dependent claims from any claim being used as dependent claims for any other claim in the claims of this application.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention will now be further described by way of the following specific embodiments, which are given by way of illustration and not of limitation, with reference to the accompanying drawings in which:

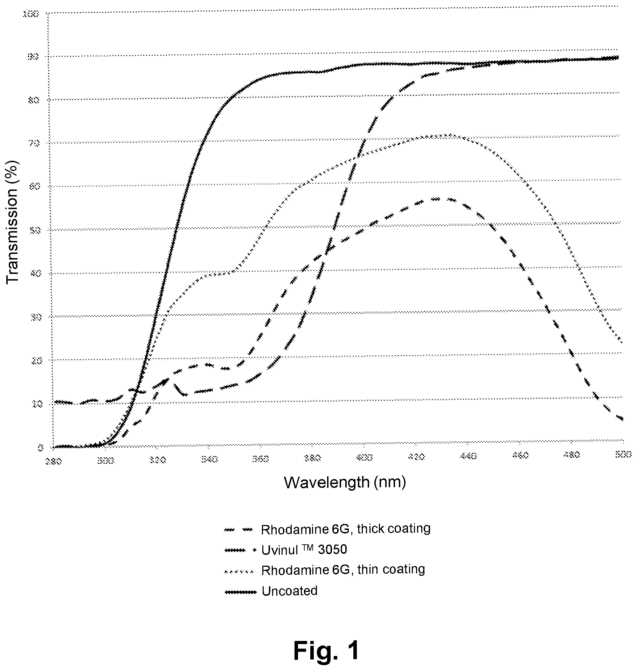

**Fig. 1** is a graph of percentage transmission vs wavelength for an uncoated colourless bottle, a coated bottle outside the scope of the present invention and two coated bottles according to the present invention with different coating thicknesses.

### Examples

Uvinul ^{™} 3050 was obtained from Sigma-Aldrich ^{™}. Rhodamine 6G was obtained from Sigma-Aldrich ^{™}. BYK ^{™} -345 was obtained from BYK ^{™}. The GPTMS was obtained from Sigma-Aldrich. The TEOS was obtained from Sigma-Aldrich.

### Comparative Example 1

A solution/mixture was prepared by stirring the components shown below in Table 1 for 35 min.

**Table 1 showing the mass of each component used for the solution/mixture prepared in Comparative Example 1**

| **Uvinul ^{™} 3050 (g)** | **Ethanol (g)** | **BYK ^{™} -345 (5% Ethanol) (g)** | **GPTMS (g)** | **TEOS (g)** | **Cone. HNOs (5% Ethanol) (g)** | **Water (g)** |
|---|---|---|---|---|---|---|
| 2.5 | 28.9 | 0.8 | 11.3 | 22.6 | 0.5 | 33.4 |

Following stirring, the solution/mixture was aged by allowing it to stand for 12 hr at 5°C. A clear, colourless, flint bottle at a temperature of 20°C was then spray coated with the solution/mixture. The spray coating was carried out using two nozzles, PTFE tubing and syringe drivers. The applied solution/mixture was then cured at 200°C for 2 hr. The light transmission characteristics of the shoulder of the resultant coated bottle were tested using a PerkinElmer ^{™} Lambda 900 spectrometer. The results are shown in Figure 1 and discussed below.

### Example 1

A solution/mixture was prepared using the components shown below in Table 2 and the same approach as Comparative Example 1.

**Table 2 showing the mass of each component used for the solution/mixture prepared in Example 1**

| **Rhodamine 6G (g)** | **Ethanol (g)** | **BYK ^{™} -345 (5% Ethanol) (g)** | **GPTMS (g)** | **TEOS (g)** | **Cone. HNO₃ (5% Ethanol) (g)** | **Water (g)** |
|---|---|---|---|---|---|---|
| 1.0 | 28.9 | 0.8 | 11.3 | 22.6 | 0.5 | 34.9 |

Following stirring, the solution/mixture was aged by allowing it to stand for 12 hr at 5°C. A clear, colourless flint bottle at a temperature of 120°C was then spray coated with the solution/mixture using the same approach as Comparative Example 1. The applied solution/mixture was then cured at 200°C for 2 hr.

The same solution/mixture prepared using the components shown in Table 2 was utilised in the same manner as in the preceding paragraph to coat another clear, colourless flint bottle except that a thicker coating was deposited.

Both of the coated bottles of Example 1 exhibited a conspicuous pink colouration, with the colour of the thicker coating being a more intense pink than that of the thinner coating.

The light transmission characteristics of the resultant coated bottles were tested as in Comparative Example 1. An uncoated, clear, colourless flint bottle was also tested in the same manner. The results are shown in Figure 1 and discussed below.

### Results

### UV Blocking Capability

Fig. 1 shows a graph of percentage transmission vs wavelength for an uncoated, clear, colourless flint bottle (labelled Uncoated), the coated bottle prepared in Comparative Example 1 (Uvinul ^{™} 3050) and the thin and thick coated bottles prepared in Example 1 (Rhodamine 6G, thin coating and Rhodamine 6G, thick coating respectively).

As will be noted, the bottle of Comparative Example 1 and both the bottles of Example 1 exhibited UV blocking capability in comparison with the uncoated colourless bottle. Indeed, the bottles of Example 1 performed better than the bottle of Comparative Example 1 in the wavelength range of 380-500nm which is of particular interest for the skunking of beer. The reduction in transmission from the thin coating to the thick coating of Example 1 demonstrates how the UV blocking performance can be fine-tuned alongside the intensity of the colour.

### Durability to Humidity

Two clear (flint) bottles were coated: one according to Comparative Example 1 and one according to Example 1. A sample with dimensions of approximately 4 cm x 3 cm and a thickness the same as the thickness of the bottle was cut from the body of each bottle.

These samples were assessed via humidity testing to investigate their resistance to harsh environments. The machine used was a Thermotron ^{™} 7800 Environmental Chamber and the conditions were 95% humidity and 50 °C. The samples were checked after 24 hours and after 48 hours.

### After 24 Hours:

Comparative Example 1 Sample - coating delamination had occurred. Patchy coating remaining on sample.

Example 1 Sample - coating had no clear defects visually, and no signs of delamination.

### After 48 hours:

Comparative Example 1 Sample - further delamination of coating with even less coverage of coating apparent.

Example 1 Sample - coating had no clear defects visually, and no signs of delamination.

These results clearly demonstrate the improved durability to humidity of the coated glass substrates of the present invention.

## Claims

1. A coated glass substrate comprising:
a transparent glass substrate coated with
a blocking layer comprising a material having Si-O-Si bonds and a blocking component,
wherein the blocking component comprises fluorone and/or a fluorone derivative, and
wherein the fluorone derivative comprises one or more of calcein, carboxyfluorescein diacetate succinimidyl ester, carboxyfluorescein succinimidyl ester, 6-carboxyfluorescein, dichlorofluorescein, eosin, eosin B, eosin Y, erythrosine, fluo-3, fluo-4, fluorescein, fluorescein amidite, fluorescein isothiocyanate, Indian yellow, merbromin, 3-carboxy-6,8-difluoro-7-hydroxycoumarin (Pacific blue), phloxine, rhodamine, rhodamine B, rhodamine 6G, rhodamine 123, carboxytetramethylrhodamine (TAMRA), tetramethylrhodamine (TMR) and its isothiocyanate derivative (TRITC), sulforhodamine 101 (and its sulfonyl chloride form Texas red), rhodamine red, NHS-rhodamine and seminaphtharhodafluor.

2. The coated glass substrate according to claim 1, wherein the transparent glass substrate is a glass container and wherein the blocking layer is located on the external surface of the container.

3. The coated glass substrate according to any preceding claim, wherein the material having Si-O-Si bonds comprises a material having a crosslinked network of Si-O-Si bonds, preferably wherein the material having Si-O-Si bonds further comprises one or more organic functional groups.

4. The coated glass substrate according to any preceding claim, wherein the blocking layer further comprises a polyol and/or diol.

5. The coated glass substrate according to any preceding claim, wherein the fluorone and/or a fluorone derivative comprises rhodamine and/or a rhodamine derivative.

6. The coated glass substrate according to any preceding claim, wherein the coated glass substrate comprises:
a transparent glass substrate coated with
a blocking layer comprising a material having Si-O-Si bonds and a blocking component,
wherein the blocking component comprises fluorone and/or a fluorone derivative,
wherein the transparent glass substrate is a glass container,
wherein the blocking layer coats at least 80% of the external surface of the container,
wherein the material having Si-O-Si bonds comprises a material having a crosslinked network of Si-O-Si bonds,
wherein the blocking component is a material that is capable of blocking electromagnetic radiation in the wavelength range 350-500 nm, and
wherein the fluorone and/or a fluorone derivative comprises rhodamine and/or a rhodamine derivative.

7. A process for preparing a coated glass substrate in accordance with any preceding claim,
said process comprising the following steps:
a) preparing a solution or mixture by mixing at least the following components: a silane, a blocking component, water and an acid, wherein the blocking component comprises fluorone and/or a fluorone derivative;
b) applying said solution or mixture to a surface of a transparent glass substrate; and
c) curing the applied solution or mixture.

8. The process according to claim 7, wherein, in step a) following the mixing the solution or mixture is aged for at least 2 hr, more preferably at least 7 hr, even more preferably at least 10 hr, most preferably at least 12 hr.

9. The process according to claim 7 or claim 8, wherein, in step b), when the solution or mixture is applied to the surface of the transparent glass substrate, said transparent glass substrate is at a temperature of less than 150°C, preferably less than 100°C, more preferably less than 70°C, most preferably less than 50°C, and/or
wherein, in step c), the applied solution or mixture is cured for at least 20 min, preferably at least 40 min, more preferably at least 50 min, most preferably at least 55 min, but preferably at most 24 hr, more preferably at most 10 hr, even more preferably at most 3 hr, most preferably at most 1.5 hr.

10. The process according to any of claims 7 to 9, wherein, in step c), the applied solution or mixture is cured at a temperature of greater than 20°C, preferably greater than 100°C, more preferably greater than 160°C, most preferably greater than 190°C, but preferably less than 400°C, more preferably less than 300°C, even more preferably less than 240°C, most preferably less than 210°C, and/or
wherein the silane is represented by the formula (1):
SiX₄ (1)
wherein X is a hydrolysable functional group or a halogen atom.

11. The process according to any of claims 7 to 10, wherein the silane is a tetraalkoxysilane such as tetraethoxysilane (TEOS), and/or
wherein the components mixed in step a) further comprise a silane coupling agent represented by the formula (2):
R¹ₘR²ₙSiX₄₋ₘ₋ₙ (2)
wherein R¹ is an organic group having a reactive functional group, R² is an organic group having no reactive functional group, X is a hydrolysable functional group or a halogen atom, m is an integer of 1 to 3, n is an integer of 0 to 2, and m+n is an integer of 1 to 3.

12. The process according to claim 11, wherein the silane coupling agent comprises one or more of vinyltriethoxysilane, p-styryltrimethoxysilane, 3-glycidoxypropyltrimethoxysilane (GPTMS), 3-glycidoxypropylmethyldiethoxysilane, 3-methacryloxypropyltrimethoxysilane, 3-aminopropyltrimethoxysilane, 3-aminopropyltriethoxysilane, N-phenyl-3-aminopropyltrimethoxysilane, tris-(trimethoxysilylpropyl)isocyanurate, 3-ureidopropyltrimethoxysilane, 3-mercaptopropyltrimethoxysilane and derivatives, and/or
wherein the solution or mixture prepared in step a) has a molar percentage (mol%) of the polyol and/or diol of at least 2 mol%, preferably at least 4 mol%, more preferably at least 5 mol%, most preferably at least 6 mol%, but preferably at most 20 mol%, more preferably at most 15 mol%, even more preferably at most 10 mol%, most preferably at most 7 mol%.

13. The process according to any of claims 7 to 12, wherein in step a) following the mixing the solution or mixture is aged for at least 2 hr;
wherein in step b), when the solution or mixture is applied to the surface of the transparent glass substrate, said transparent glass substrate is at a temperature of less than 50°C;
wherein the silane is a tetraalkoxysilane;
wherein the components mixed in step a) further comprise a silane coupling agent represented by the formula (2):
R¹ₘR²ₙSiX₄₋ₘ₋ₙ (2)
wherein R¹ is an organic group having a reactive functional group, R² is an organic group having no reactive functional group, X is a hydrolysable functional group or a halogen atom, m is an integer of 1 to 3, n is an integer of 0 to 2, and m+n is an integer of 1 to 3; and
wherein the fluorone and/or a fluorone derivative comprises rhodamine and/or a rhodamine derivative.

14. Use of fluorone and/or a fluorone derivative as a UV blocking component of a blocking layer coating a transparent glass substrate wherein the blocking layer further comprises a material having Si-O-Si bonds.

15. Use of fluorone and/or a fluorone derivative to improve the durability to humidity of a blocking layer coating a transparent glass substrate wherein the blocking layer further comprises a material having Si-O-Si bonds.

## Patentansprüche

1. Beschichtetes Glassubstrat, umfassend:
ein transparentes Glassubstrat, beschichtet mit
einer Blockierschicht ist, die ein Material mit Si-O-Si-Bindungen und eine Blockierkomponente umfasst, wobei die Blockierkomponente Fluoron und/oder ein Fluoronderivat umfasst, und wobei das Fluoronderivat eines oder mehrere von Calcein, Carboxyfluoresceindiacetatsuccinimidylester, Carboxyfluoresceinsuccinimidylester, 6-Carboxyfluorescein, Dichlorfluorescein, Eosin, Eosin B, Eosin Y, Erythrosin, Fluo-3, Fluo-4, Fluorescein, Fluoresceinamidit, Fluoresceinisothiocyanat, Indischgelb, Merbromin, 3-Carboxy-6,8-difluoro-7-hydroxycumarin (Pacific Blue), Phloxin, Rhodamin, Rhodamin B, Rhodamin 6G, Rhodamin 123, Carboxytetramethylrhodamin (TAMRA), Tetramethylrhodamin (TMR) und dessen Isothiocyanat-Derivat (TRITC), Sulforhodamin 101 (und dessen Sulfonylchlorid-Form Texas Red), Rhodamin-Rot, NHS-Rhodamin und Seminaphtharhodafluor umfasst.

2. Beschichtetes Glassubstrat nach Anspruch 1, wobei das transparente Glassubstrat ein Glasbehälter ist und sich die Sperrschicht auf der Außenfläche des Behälters befindet.

3. Beschichtetes Glassubstrat nach einem der vorhergehenden Ansprüche, bei dem das Material mit Si-O-Si-Bindungen ein Material mit einem vernetzten Netzwerk von Si-O-Si-Bindungen umfasst, vorzugsweise wobei das Material mit Si-O-Si-Bindungen ferner eine oder mehrere organische funktionelle Gruppen umfasst.

4. Beschichtetes Glassubstrat nach einem der vorhergehenden Ansprüche, bei dem die Blockierschicht ferner ein Polyol und/oder ein Diol umfasst.

5. Beschichtetes Glassubstrat nach einem der vorhergehenden Ansprüche, bei dem das Fluoron und/oder ein Fluoronderivat Rhodamin und/oder ein Rhodaminderivat umfasst.

6. Beschichtetes Glassubstrat nach einem der vorhergehenden Ansprüche, wobei das beschichtete Glassubstrat umfasst:
ein transparentes Glassubstrat, beschichtet mit
einer Blockierschicht, die ein Material mit Si-O-Si-Bindungen und eine Blockierkomponente umfasst, wobei die Blockierkomponente Fluoron und/oder ein Fluoron-Derivat umfasst,
wobei das transparente Glassubstrat ein Glasbehälter ist,
wobei die Blockierschicht mindestens 80 % der Außenfläche des Behälters bedeckt,
wobei das Material mit Si-O-Si-Bindungen ein Material mit einem vernetzten Netzwerk von Si-O-Si-Bindungen umfasst,
wobei die Blockierkomponente ein Material ist, das in der Lage ist, elektromagnetische Strahlung im Wellenlängenbereich von 350-500 nm zu blockieren, und
wobei das Fluoron und/oder ein Fluoronderivat Rhodamin und/oder ein Rhodaminderivat umfasst.

7. Verfahren zur Herstellung eines beschichteten Glassubstrats gemäß einem der vorhergehenden Ansprüche,
wobei das Verfahren die folgenden Schritte umfasst:
a) Herstellen einer Lösung oder eines Gemisches durch Mischen mindestens der folgenden Komponenten: ein Silan, eine Blockierkomponente, Wasser und eine Säure, wobei die Blockierkomponente Fluoron und/oder ein Fluoronderivat umfasst;
b) Auftragen der Lösung oder des Gemisches auf eine Oberfläche eines transparenten Glassubstrats; und
c) Aushärten der aufgetragenen Lösung oder des aufgetragenen Gemisches.

8. Verfahren nach Anspruch 7, bei dem in Schritt a) nach dem Mischen die Lösung oder das Gemisch mindestens 2 Stunden, bevorzugter mindestens 7 Stunden, noch bevorzugter mindestens 10 Stunden, am meisten bevorzugt mindestens 12 Stunden lang gealtert wird.

9. Verfahren nach Anspruch 7 oder 8, bei dem in Schritt b), wenn die Lösung oder das Gemisch auf die Oberfläche des transparenten Glassubstrats aufgetragen wird, das transparente Glassubstrat eine Temperatur von weniger als 150°C, vorzugsweise weniger als 100°C, noch bevorzugter weniger als 70°C, am meisten bevorzugt weniger als 50°C hat, und/oder
bei dem in Schritt c) die aufgetragene Lösung oder das aufgetragene Gemisch mindestens 20 min, vorzugsweise mindestens 40 min, stärker bevorzugt mindestens 50 min, am meisten bevorzugt mindestens 55 min, aber vorzugsweise höchstens 24 h, stärker bevorzugt höchstens 10 h, noch stärker bevorzugt höchstens 3 h, am meisten bevorzugt höchstens 1,5 h lang gehärtet wird.

10. Verfahren nach einem der Ansprüche 7 bis 9, bei dem in Schritt c) die aufgetragene Lösung oder das aufgetragene Gemisch bei einer Temperatur von mehr als 20°C, vorzugsweise mehr als 100°C, stärker bevorzugt mehr als 160°C, am meisten bevorzugt mehr als 190°C, jedoch vorzugsweise weniger als 400°C, stärker bevorzugt weniger als 300°C, noch stärker bevorzugt weniger als 240°C, am meisten bevorzugt weniger als 210°C, gehärtet wird, und/oder
wobei das Silan durch die Formel (1)
SiX₄ (1)
dargestellt wird, in der X eine hydrolysierbare funktionelle Gruppe oder ein Halogenatom ist.

11. Verfahren nach einem der Ansprüche 7 bis 10, bei dem das Silan ein Tetraalkoxysilan wie Tetraethoxysilan (TEOS) ist, und/oder
bei dem die in Schritt a) gemischten Komponenten ferner ein durch die Formel (2)
R¹ₘ R²ₙSiX₄₋ₘ₋ₙ (2)
dargestelltes Silankopplungsmittel umfassen,
in der R¹ eine organische Gruppe mit einer reaktiven funktionellen Gruppe ist, R² eine organische Gruppe ohne reaktive funktionelle Gruppe ist, X eine hydrolysierbare funktionelle Gruppe oder ein Halogenatom ist, m eine ganze Zahl von 1 bis 3 ist, n eine ganze Zahl von 0 bis 2 ist, und m+n eine ganze Zahl von 1 bis 3 ist.

12. Verfahren nach Anspruch 11, bei dem das Silankopplungsmittel eines oder mehrere von Vinyltriethoxysilan, p-Styryltrimethoxysilan, 3-Glycidoxypropyltrimethoxysilan (GPTMS), 3-Glycidoxypropylmethyldiethoxysilan, 3-Methacryloxypropyltrimethoxysilan 3-Aminopropyltrimethoxysilan, 3-Aminopropyltriethoxysilan, N-Phenyl-3-aminopropyltrimethoxysilan, Tris-(trimethoxysilylpropyl)isocyanurat, 3-Ureidopropyltrimethoxysilan, 3-Mercaptopropyltrimethoxysilan und Derivate umfasst, und/oder
bei dem die in Schritt a) hergestellte Lösung oder das in Schritt a) hergestellte Gemisch einen molaren Prozentsatz (Mol-%) des Polyols und/oder Diols von mindestens 2 Mol-%, vorzugsweise von mindestens 4 Mol-%, noch bevorzugter von mindestens 5 Mol-%, am meisten bevorzugt von mindestens 6 Mol-%, jedoch vorzugsweise von höchstens 20 Mol-%, noch bevorzugter von höchstens 15 Mol-%, noch bevorzugter von höchstens 10 Mol-%, am meisten bevorzugt von höchstens 7 Mol-% aufweist.

13. Verfahren nach einem der Ansprüche 7 bis 12, bei dem in Schritt a) nach dem Mischen die Lösung oder das Gemisch für mindestens 2 Stunden gealtert wird;
bei dem in Schritt b), wenn die Lösung oder das Gemisch auf die Oberfläche des transparenten Glassubstrats aufgebracht wird, das transparente Glassubstrat eine Temperatur von weniger als 50°C aufweist;
bei dem das Silan ein Tetraalkoxysilan ist;
bei dem die in Schritt a) gemischten Komponenten ferner ein Silankopplungsmittel umfassen, das durch die Formel (2)
R¹ₘR²ₙSiX₄₋ₘ₋ₙ (2)
dargestellt ist, in der R¹ eine organische Gruppe mit einer reaktiven funktionellen Gruppe ist, R² eine organische Gruppe ohne reaktive funktionelle Gruppe ist, X eine hydrolysierbare funktionelle Gruppe oder ein Halogenatom ist, m eine ganze Zahl von 1 bis 3 ist, n eine ganze Zahl von 0 bis 2 ist, und m+n eine ganze Zahl von 1 bis 3 ist; und
das Fluoron und/oder ein Fluoronderivat Rhodamin und/oder ein Rhodaminderivat umfasst.

14. Verwendung von Fluoron und/oder einem Fluoronderivat als UV-blockierende Komponente einer Blockierschicht, mit der ein transparentes Glassubstrat beschichtet ist, wobei die Blockierschicht ferner ein Material mit Si-O-Si-Bindungen umfasst.

15. Verwendung von Fluoron und/oder einem Fluoronderivat zur Verbesserung der Beständigkeit einer Blockierschicht, mit der ein transparentes Glassubstrat beschichtet ist, gegenüber Feuchtigkeit, wobei die Blockierschicht ferner ein Material mit Si-O-Si-Bindungen umfasst.

## Revendications

1. Substrat en verre revêtu comprenant :
un substrat en verre transparent revêtu avec
une couche de blocage comprenant un matériau présentant des liaisons Si-O-Si et un constituant de blocage,
dans lequel le constituant de blocage comprend de la fluorone et/ou un dérivé de fluorone, et
dans lequel le dérivé de fluorone comprend un ou plusieurs de calcéine, ester succinimidylique de diacétate de carboxyfluorescéine, ester succinimidylique de carboxyfluoroescéine, 6-carboxyfluorescéine, dichlorofluorescéine, éosine, éosine B, éosine Y, érythrosine, fluo-3, fluo-4, fluorescéine, amidite de fluorescéine, isothiocyanate de fluorescéine, jaune indien, merbromine, 3-carboxy-6,8-difluoro-7-hydroxycoumarine (bleu pacifique), phloxine, rhodamine, rhodamine B, rhodamine 6G, rhodamine 123, carboxytétraméthylrhodamine (TAMRA), tétraméthylrhodamine (TMR) et son dérivé isothiocyanate (TRITC), sulforhodamine 101 (et son rouge Texas de forme chlorure de sulfonyle), rouge de rhodamine, NHS-rhodamine et seminaphtarhodafluor.

2. Substrat en verre revêtu selon la revendication 1, dans lequel le substrat en verre transparent est un récipient en verre et dans lequel la couche de blocage est disposée sur la surface externe du récipient.

3. Substrat en verre revêtu selon l'une quelconque des revendications précédentes, dans lequel le matériau présentant des liaisons Si-O-Si comprend un matériau présentant un réseau réticulé de liaisons Si-O-Si, de préférence dans lequel le matériau présentant des liaisons Si-O-Si comprend de plus un ou plusieurs groupes fonctionnels organiques.

4. Substrat en verre revêtu selon l'une quelconque des revendications précédentes, dans lequel la couche de blocage comprend de plus un polyol et/ou diol.

5. Substrat en verre revêtu selon l'une quelconque des revendications précédentes, dans lequel la fluorone et/ou un dérivé de fluorone comprend de la rhodamine et/ou un dérivé de rhodamine.

6. Substrat en verre revêtu selon l'une quelconque des revendications précédentes, dans lequel le substrat en verre revêtu comprend :
un substrat en verre transparent revêtu avec
une couche de blocage comprenant un matériau présentant des liaisons Si-O-Si et un constituant de blocage,
dans lequel le constituant de blocage comprend de la fluorone et/ou un dérivé de fluorone,
dans lequel le substrat en verre transparent est un récipient en verre,
dans lequel la couche de blocage recouvre au moins 80 % de la surface externe du récipient,
dans lequel le matériau présentant des liaisons Si-O-Si comprend un matériau présentant un réseau réticulé de liaisons Si-O-Si,
dans lequel le constituant de blocage est un matériau qui est capable de bloquer un rayonnement électromagnétique dans l'intervalle de longueur d'onde de 350-500 nm, et
dans lequel la fluorone et/ou un dérivé de fluorone comprend de la rhodamine et/ou un dérivé de rhodamine.

7. Procédé pour la préparation d'un substrat en verre revêtu selon l'une quelconque des revendications précédentes,
ledit procédé comprenant les étapes suivantes :
a) préparation d'une solution ou d'un mélange en mélangeant au moins les constituants suivants : un silane, un constituant de blocage, de l'eau et un acide, dans lequel le constituant de blocage comprend de la fluorone et/ou un dérivé de fluorone ;
b) application de ladite solution ou dudit mélange sur une surface d'un substrat en verre transparent ; et
c) durcissement de la solution ou du mélange appliqué.

8. Procédé selon la revendication 7, dans lequel, dans l'étape a) suivant le mélange la solution ou le mélange est vieilli pendant au moins 2 h, encore mieux au moins 7 h, bien mieux encore au moins 10 h, particulièrement de préférence au moins 12 h.

9. Procédé selon la revendication 7 ou 8, dans lequel, dans l'étape b), lorsque la solution ou le mélange est appliqué à la surface du substrat en verre transparent, ledit substrat en verre transparent est à une température inférieure à 150°C, de préférence inférieure à 100°C, encore mieux inférieure à 70°C, bien mieux encore inférieure à 50°C, et/ou
dans lequel, dans l'étape c), la solution ou le mélange appliqué est durci pendant au moins 20 min, de préférence au moins 40 min, encore mieux au moins 50 min, bien mieux encore au moins 55 min, mais de préférence au plus 24 h, encore mieux au plus 10 h, bien mieux encore au plus 3 h, particulièrement de préférence au plus 1,5 h.

10. Procédé selon l'une quelconque des revendications 7 à 9, dans lequel, dans l'étape c), la solution ou le mélange appliqué est durci à une température supérieure à 20°C, de préférence supérieure à 100°C, encore mieux supérieure à 160°C, bien mieux encore supérieure à 190°C, mais de préférence inférieure à 400°C, encore mieux inférieure à 300°C, bien mieux encore inférieure à 240°C, particulièrement de préférence inférieure à 210°C, et/ou
dans lequel le silane est représenté par la formule (1) :
SiX₄ (1)
dans laquelle X est un groupe fonctionnel hydrolysable ou un atome d'halogène.

11. Procédé selon l'une quelconque des revendications 7 à 10, dans lequel le silane est un tétraalcoxysilane tel que le tétraéthoxysilane (TEOS), et/ou
dans lequel les constituants mélangés dans l'étape a) comprennent de plus un agent de couplage de silane représenté par la formule (2) :
R¹ₘR²ₙSiX₄₋ₘ₋ₙ (2)
dans laquelle R¹ est un groupe organique ayant un groupe fonctionnel réactif, R² est un groupe organique n'ayant pas de groupe fonctionnel réactif, X est un groupe fonctionnel hydrolysable ou un atome d'halogène, m est un nombre entier de 1 à 3, et n est un nombre entier de 0 à 2, et m+n est un nombre entier de 1 à 3.

12. Procédé selon la revendication 11, dans lequel l'agent de couplage de silane comprend un ou plusieurs de vinyltriéthoxysilane, p-styryltriméthoxysilane, 3-glycidoxypropyltriméthoxysilane (GPTMS), 3-glycidoxypropylméthyldiéthoxysilane, 3-méthacryloxypropyltriméthoxy-silane, 3-aminopropyltriméthoxysilane, 3-aminopropyltriéthoxysilane, N-phényl-3-aminopropyltriméthoxysilane, tris-(triméthoxysilylpropyl)-isocyanurate, 3-uréidopropyltriméthoxysilane, 3-mercaptopropyl-triméthoxysilane et dérivés, et/ou
dans lequel la solution ou le mélange préparé dans l'étape a) présente un pourcentage molaire (% en mole) du polyol et/ou diol d'au moins 2 % en mole, de préférence d'au moins 4 % en mole, encore mieux d'au moins 5 % en mole, bien mieux encore d'au moins 6 % en mole, mais de préférence d'au plus 20 % en mole, encore mieux d'au plus 15 % en mole, bien mieux encore d'au plus 10 % en mole, particulièrement de préférence d'au plus 7 % en mole.

13. Procédé selon l'une quelconque des revendications 7 à 12, dans lequel dans l'étape a) suivant le mélange la solution ou le mélange est vieilli pendant au moins 2 h ;
dans lequel dans l'étape b), lorsque la solution ou le mélange est appliqué à la surface du substrat en verre transparent, ledit substrat en verre transparent est à une température inférieure à 50°C ;
dans lequel le silane est un tétraalcoxysilane ;
dans lequel les constituants mélangés dans l'étape a) comprennent de plus un agent de couplage de silane représenté par la formule (2) :
R¹ₘR²ₙSiX₄₋ₘ₋ₙ (2)
dans laquelle R¹ est un groupe organique ayant un groupe fonctionnel réactif, R² est un groupe organique n'ayant pas de groupe fonctionnel réactif, X est un groupe fonctionnel hydrolysable ou un atome d'halogène, m est un nombre entier de 1 à 3, n est un nombre entier de 0 à 2, et m+n est un nombre entier de 1 à 3 ; et
dans lequel la fluorone et/ou un dérivé de fluorone comprend de la rhodamine et/ou un dérivé de rhodamine.

14. Utilisation de fluorone et/ou d'un dérivé de fluorone comme un constituant bloquant les UV d'une couche de blocage recouvrant un substrat en verre transparent dans laquelle la couche de blocage comprend de plus un matériau présentant des liaisons Si-O-Si.

15. Utilisation de fluorone et/ou d'un dérivé de fluorone pour améliorer la durabilité à l'humidité d'une couche de blocage recouvrant un substrat en verre transparent dans laquelle la couche de blocage comprend de plus un matériau présentant des liaisons Si-O-Si.
